# EUROPEAN PATENT SPECIFICATION

(11) **EP 4 109 359 B1**
(45) Date of publication and mention of the grant of the patent: **28.01.2026**
(21) Application number: 21187938.2
(22) Date of filing: 27.07.2021
(51) Int. Cl.: G06Q 10/06, G06Q 50/40

(54) **METHOD AND SYSTEM FOR LIFE CYCLE ASSESSMENT OF A VEHICLE SUCH AS AN AIRCRAFT**
VERFAHREN UND SYSTEM ZUR LEBENSZYKLUSBEWERTUNG EINES VERKEHRSMITTELS WIE Z. B. EINES FLUGZEUGS
MÉTHODE ET SYSTÈME D'ÉVALUATION DU CYCLE DE VIE D'UN VÉHICULE TEL QU'UN AÉRONEF

(30) Priority: 22.06.2021 EP 21181008
(43) Date of publication of application: 28.12.2022
(73) Proprietor: Airbus Operations GmbH, 21129 Hamburg (DE)
(72) Inventor: Reiss, Matthias, 21129 Hamburg (DE); Keiser, Dennis, 28209 Bremen (DE); Bauer, Michael, 21129 Hamburg (DE); Terno, Antje, 21129 Hamburg (DE); Otto, Thorsten, 21129 Hamburg (DE); Becker, Axel, 21129 Hamburg (DE); Freitag, Michael, 28719 Bremen (DE); Eizaguirre, Maite Gonzalez, 21129 Hamburg (DE); Ernits, Rafael Mortensen, 28209 Bremen (DE); Panter, Lars, 28357 Bremen (DE)
(74) Representative: KASTEL Patentanwälte PartG mbB

(56) References cited:
- CALADO ELCIN ALEIXO ET AL: "Integrating life cycle assessment (LCA) and life cycle costing (LCC) in the early phases of aircraft structural design: an elevator case study", THE INTERNATIONAL JOURNAL OF LIFE CYCLE ASSESSMENT, SPRINGER, DE, vol. 24, no. 12, 14 June 2019 (2019-06-14), pages 2091 - 2110, XP036941579, ISSN: 0948-3349, [retrieved on 20190614], DOI: 10.1007/S11367-019-01632-8
- LINDNER J P ET AL: "Life cycle assessment of an aircraft cabin element", 1 January 2011 (2011-01-01), pages 1 - 6, XP009532496, Retrieved from the Internet <URL:http://www.lcm2011.org/papers.html?file=tl_files/pdf/paper/18_Session_LCM_in_the_Manufacturing_Sector/4_Lindner-Life_cycle_assessment_of_an_aircraft_cabin_element-688_b.pdf> [retrieved on 20220104]

## Description

The invention relates to a method and system for life cycle assessment of a vehicle such as an aircraft.

Life cycle assessment (short: LCA) is a key enabler to assess the environmental impact of products or services considering the entire life cycle. Therefore, it can be used for the eco-efficient improvement of products. Transparency of environmental impact can be an important lever to assess suppliers and foster more eco efficient layout / design decisions along the complete value chain. For aircraft, reducing the environmental impact means primarily reducing carbon emissions and fuel consumption, respectively.

Calado et al.: "Integrating life cycle assessment (LCA) and life cycle costing (LCC) in the early phases of aircraft structural design: an elevator case study", THE INTERNATIONAL JOURNAL OF LIFE CYCLE ASSESSMENT, SPRINGER, DE, vol. 24, no. 12, 14 June 2019, pages 2091-2110, XP036941579, ISSN: 0948-3349, DOI: 10.1007/S11367-019-01632-8 discloses a model that combines economic and environmental assessment tools to support the composite material selection of aircraft structures in early phases of design. The disclosure shows that the elevator LCA score reduces 53% by selecting the optimum instead of the best technical solution that minimizes the displacement.

Lindner et al.: "Life cycle assessment of an aircraft cabin element", LCM 2011: LIFE CYCLE MANAGEMENT CONFERENCE; BERLIN; AUGUST 28-31, 2011, 1 January 2011, pages 1-6, XP009532496, discloses an LCA of an interior sidewall panel. While the production phase was the focus of attention, other phases, in particular operation were not involved in detail.

It is the object of the invention to improve the environmental footprint of air travel.

The object is achieved by the subject-matter of then independent claims. Preferred embodiments are subject-matter of the dependent claims.

The invention provides a computer-implemented method for life cycle assessment relating to the environmental footprint of a vehicle, the method comprising:
a) a group of data sources providing data related to vehicle equipment, wherein the group of data sources comprises a first data source (14) that provides product related data that include requirements for manufacture of the vehicle, wherein the product related data include CAD/CAM data,
   a fourth data source providing operation related data indicative of the operation of the vehicle, wherein the fourth data source (22) provides operation related data obtained by a logging device (44), and the operation related data include energy consumption data of the vehicle, wherein the operation related data exclude activities that are part of passenger interaction, and
   a fifth data source providing specific usage data indicative of the specific usage of a piece of vehicle equipment by a vehicle operator, wherein the specific usage data include any of cabin configuration data, cabin operation data, power consumption data, mission profile data, seat count, commodities configuration data, wherein the specific usage data are indicative of any activities or pieces of equipment that are installed for passengers;
b) determining a reference LCA based on the data obtained in step a);
c) determining configuration change data based on configuration data that relates to the configuration of the vehicle;
d) determining an environmental footprint of the vehicle based on the reference LCA and the configuration change data.

Preferably, the vehicle is an aerial vehicle or aircraft, such as an airplane, a helicopter or an unmanned aerial vehicle or drone. The vehicle can be designed for mainly cargo transport or mainly passenger transport. The vehicle can also be designed for urban area mobility, e.g. air taxi.

Preferably, the vehicle configuration includes a vehicle interior configuration, such as a cabin configuration and/or cargo hold configuration.

Preferably, the product related data includes a bill of materials and/or a bill of process. Preferably, the product related data may in clude data relating to an eco assessment.

Preferably, the group of data sources comprises a second data source that provides supplier related data that are indicative of the environmental footprint of a product or piece of equipment that is supplied to a vehicle manufacturer.

Preferably, the product supplied is a piece of vehicle equipment, and the supplier related data is indicative of the energy consumption of the vehicle equipment. The supplier related data can be updated or changed in level of detail by the supplier basically with almost no delay, if, for example, relevant circumstances at the supplier change. Preferably, the vehicle equipment is cabin equipment or cargo hold equipment. The cabin equipment is preferably interior equipment that is operated by the vehicle operator, crew or passenger.

Preferably, the group of data sources includes a third data source that provides recycling related data that may relate to resource consumption of a piece of vehicle equipment or the vehicle.

The fourth data source provides operation related data obtained by a logging device, and the operation related data include energy consumption data, such as electrical power consumption data and/or fuel consumption data, of the vehicle, or preferably the vehicle interior equipment, such as cabin equipment and/or cargo hold equipment.

Preferably, the reference LCA data are determined by calculating the energy consumption, such as electrical power consumption and/or fuel consumption, caused by the vehicle equipment due to the specific usage indicated by the specific usage data. The reference LCA may serve as a baseline against which improvements of the environmental footprint are measured.

Preferably, the configuration change data are determined by calculating the energy consumption caused by a specific vehicle configuration indicated by the configuration data.

Preferably, the environmental footprint includes energy consumption, that is determined based data of steps a) to c).

The invention provides an LCA system for determining an environmental footprint of a vehicle, the LCA comprising means for carrying out the previously described method.

Life cycle assessments are currently done with a great deal of effort and have so far only been carried out with approximated data for the operations phase of aircrafts. The main of the ideas herein is to simplify the process of input data collection of environmental impact results on different levels - equipment, commodity, and cabin level. Data collection and processing comprises equipment related data and operational data from in service at the same time. In contrast to current LCA approaches, the ideas disclosed herein allow a dynamic assessment of changes to the parameters that influence the life cycle, in particular the environmental footprint. Hence, changes are easier to implement compared to the usual techniques.

A goal of the invention is to allow for a quick and flexible environmental assessment. With this it is easier to find a configuration of the aircraft that will enable a reduced environmental footprint. The apporach is holistic, meaning all stakeholders (suppliers, vehicle manufacturers, vehicle operators, recyclers, even passengers) can be involved in the assessment. Thus, compared to current methods, the data involved are far more reliable and complete and allow a more reliable assessment overall.

Another advantage of the invention is that vehicle designs can be improved iteratively by successively replacing equipment that has a larger envirionmental impact with equipment that has a lower one.

The simplified LCA method allows ad-hoc and broad applicability of the so far very complex and time consuming LCA process, which can be applied for internal (i.e. aircraft manufacturer) and external (e.g. airlines, recyclers, supplier and passenger) use.

In more detail, the proposed ideas enable data acquisition during the operational phase of the aircraft, processing of the data, visualization of the results and the division and presentation of correlations, division and representation of correlations, improvement of the cabin in terms of eco efficiency.

The proposed method allows the life cycle assessment of specific aircraft cabin components (e.g. seats, galley, oven, coffee maker, lavatory, air chiller, trash compactor) for different layouts and operational conditions. The proposed method may include static and dynamic datasets for the whole life cycle of cabin components and enables supplier, aircraft manufacturer as well as airlines to perform an eco-efficient assessment.

The method may make use of a combination of static and dynamic aircraft data. Preferable the method processes operation related data and in-service related data, such as power profiles, maintenance and retrofit data, water consumption data, amount of services data, waste related data, for each cabin component. A data logger may record operation related data of the aircraft. The static and dynamic data may be stored in a database. A processing unit can calculate correlations and results between the different operation related and in-service related data, so as to estimate the respective impact on fuel consumption. Users may also define criteria and visualize the results. The idea is also to gather system data for the dismantling of components.

With the ideas described herein, a real time and specific life cycle assessment is possible. Thereby the environmental footprint of the aircraft can be improved.

To this end, the cabin operations, cabin equipment, design measures and cabin service can be included in the assessment. Also the operations phase is considered as well as the recycling phase.

With this the design to cost or design to value can be determined also with specific data input for eco sustainability, circularity & material values. Different designs/configurations of the aircraft may be compared in terms of various eco aspects for continuous improvement. The LCA can be used as an internal and an external tool (e.g. as a service for customers to analyze environmental impact of layout decisions, retrofit, etc.). Preferably, not only aircraft manufacturing data, but also equipment manufacturing data are used in the LCA.

The method can be divided into different layers and inputs. The input data collection may be done in different layers. A layer is, for example, the aircraft itself depending on the mission profile, the engine, and other properties that are associated with the bare aircraft, i.e. without interior equipment.

Another layer is the cabin, which is concerned with layout, seat count and operational properties of the cabin. Another layer can be the so called commodity layer, which is concerned with the configuration of the cabin, such as how many and which monuments (lavatory, galley, etc.) as well as their location. Another layer is the equipment layer, which is concerned with the devices that are installed in the monuments. Furthermore, the method may consider material use and subcomponents.

The LCA method can also process/output environmental indicators of the different layers, such as equipment, commodity, and cabin.

Considering the different layers to process the respective indicators, the following main areas can be investigated:
1) equipment: balancing design measures incl. all life phases (e.g. weight vs. recycling), equipment ops
2) commodity: improve eco efficiency of configuration (e.g. galley)
3) cabin: improve overall cabin env. footprint inc. cabin layout and overall consideration of entire cabin equipment and operational aspect.

The proposed method may process specific key figures from the aviation industry. In addition, specific data for the operational phase may be processed. Furthermore, so called trade factors can be introduced. They allow a simplified LCA of aircraft components.

In principle, the LCA method incorporates the following dataflow-.
1) Raw data (supplier specific, airline specific, recycler specific) and auxiliary variables are provided (e.g. using e-forms)
2) Upload of auxiliary variables into LCA method in order to determine environmental indicators (customized assumptions based on aux variables (e.g. power profiles may also be included). Furthermore, trade factors may be considered for each correlation between an auxiliary variable and assumptions to each environmental indicator
3) The environmental indicators may be further processed in order to improve the environmental footprint of the aircraft by reconfiguring some of the layers. Additionally, the environmental indicators of all layers may be visualized.

Environmental indicators that are relevant here include in a non-exhaustive list:
- particulate matter,
- atmospheric layer dependent ozone formation and/or depletion (human made and/or natural),
- human toxicity (cancer and non-cancer),
- global warming,
- water use,
- freshwater ecotoxicity,
- freshwater eutrophication,
- terrestrial ecotoxicity,
- terrestrial acidification,
- land use/transformation,
- marine ecotoxicity,
- marine eutrophication,
- mineral resources, and
- fossil resources.

Each of these factors can be combined with other factors into a damage pathway that models the impact of those factors on an area of protection. In particular the factors mineral resources and fossil resources may have damage pathways that relate to energy consumption, which ultimately affects resource availability.

Operational data from in-service can be incorporated (and interlinked with equipment data) with e-forms which can be filled by the users of the aircraft. With the interlink of operational data to equipment data (e.g. power consumption of a specific use case), specific power profiles can be derived for the specific use case; also specific maintenance / repair intervals can be taken into account.

In order to include real data from in-service directly, the data collection during the operations phase can be (as an option) also complemented with a data logger. The data logger is derived from the specific data in the operations phase. This also includes maintenance data from in-service.

The electronic device automatically monitors and records various environmental parameters relevant for LCA in real-time during aircraft operation. In this way, environmental conditions can be measured, documented, analyzed and verified. The data logger contains an interface that connects to other devices for the acquisition of LCA relevant data or it has itself sensors for data acquisition. Afterwards, the information stored in the data logger can be transferred to a computer system for analysis or to a cloud system. The LCA Data Logger could be used as an add-on or directly integrated in the aircraft.

As an example, the data logger can be used for the aircraft galley or lavatory. But these ideas can be extended to all aircraft commodities for achieving a complete, individual and real-time updated life cycle assessment of the whole aircraft cabin. As a further embodiment of the invention, the end of life usage could be directly connected with experience and dismantling efforts from recyclers for different equipment types.

The dismantling effort can be systematically analyzed and captured by using sensors during the process. This information can be captured in an e-form and interlinked with the relevant equipment database within the LCA calculator.

An identification system on each piece of equipment allows a correct allocation of relevant information to the applicable equipment. This identification can be a tag of some kind having for example a bar code, QR code or RFID device, which can be scanned by the dismantler or recycler. The code preferably linked to all relevant information in a data cloud.

As a further idea, the information related to cabin operations can be directly interlinked with an inventory management system within the cabin. This relates to catering usage but also usage of potable water and on ground operational activities such as disinfection fluid.

In principle, the inventory management can be captured as described in EP 3 552 962 A1.

Whereas Design to Cost (DtC) and Design to Value (DtV) are known methods, the combination of both is a novel approach. Considering eco sustainability and circularity as values with all their subclusters for design, production, operation and end of life, it will add benefit to link them with data from the LCA to enable designers and customers to improve the changes to be made, in order to reduce environmental impact of air travel. The data base used for LCA and the results can help finetune the data for DtV/DtC and vice versa make the design even more comparable for detailed configurations on eco sustainability and circularity steps.

The possibility for design concept decisions allows balancing of different technical criteria to minimize environmental impact, such as recycling opportunities vs. operational efficiency (e.g. weight reduction).

Overall the ideas disclosed herein give the possibility for the combination of encrypted static data and real-time dynamic data and enable translation of specific data from e.g., manufacturing, into LCA data.

The idea enables the calculation of life cycle assessment for single flight and single passenger, in this way opening possibilities for a green ticket with precise environmental compensation after flying or even for calculation of individual flying taxes that could arrive in the future. It also enables the environmental improvement of cabin design and operation, as the combination of static data with real-time data may turn the bottlenecks visible. Besides, it gives the possibility of introducing new environmental KPIs for improving processes outside the aircraft, e.g., sustainable flight catering and supply chain. The ideas disclosed herein also enable and improve data exchange between different stakeholders, without compromising secret data or data which the respective stakeholder does not wish to advertise to other stakeholders.

It should be noted that, while the invention is described in more detail based on a passenger aircraft having a passenger cabin, the invention is also applicable in the field of cargo airplanes.

Additional information may be found in the enclosed presentation titled "Supplier Collaboration WS LCA - WS Data flow LCA" by Matthias Reiss, which is incorporated herein by reference and forms part of the original disclosure of the invention.

The presentation was completed on 21-06-2021 and held to a restricted audience under non-disclosure agreements on 22-06-2021.

For more detail on the life-cycle and eco assessment methods, indicators and relevant data reference is made to the enclosed documents "ReCiPe 2016 v1.1 - A harmonized life cycle impact assessment method at midpoint and endpoint level" by the Natinal Institue for Public Health and the Environment of the Netherlands, and "Supporting information to the characterisation factors of recommended EF Life Cycle Impact Assessment methods" by the European Commission, whose disclosure is incorporated herein by reference.

While the the invention is illustrated and described in more detail with respect to aircraft, the application of the invention is not limited thereto. It is possible to apply this invention for all kinds of vehicles, including water vehicles.

Embodiments of the invention are described in more detail with reference to the accompanying drawings. Therein:
- Fig. 1: depicts an embodiment of an LCA system; and
- Fig. 2: depicts an embodiment of a data flow of an LCA system.

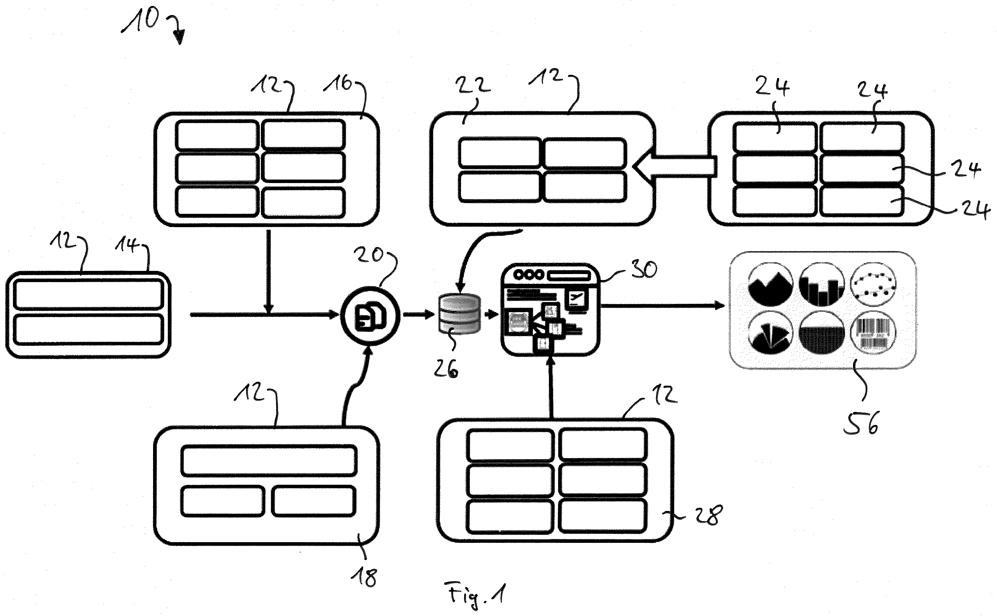

Fig. 1 depicts an embodiment of a life cycle assessment system (LCA system) 10. The LCA system 10 is configured to collect and analyses environmental related data of an aircraft. The environmental related data are used by the LCA system 10 to determine an environmental footprint of the aircraft. The environmental footprint - not only for the aircraft, but in general - may include resource consumption for any of a manufacturing phase, an operation phase, and an end-of-life phase. For the manufacturing phase this means, for example, materials consumption, for the operation phase mainly fuel consumption, maintenance and repair, and for the end-of-life phase the material and energy consumption for dismantling, recycling, or destroying.

The LCA system 10 comprises a plurality of data sources 12.

A first data source 14 provides product related data. The product related data are indicative of the environmental footprint of a specific product that is used in manufacturing and equipping the aircraft. The product related data include requirements, cut-off rules, and/or CAD/CAM data. The cut-off rules allow to limit the data to top contributors, e.g. only the top ten resourced etc. are considered for further analysis. In particular, the CAD/CAM data may be analyzed with respect to resource consumption, such as materials needed for manufacture and tooling as well as energy consumption during manufacture.

A second data source 16 provides supplier related data. The supplier related data are indicative of the environmental footprint of any products that are supplied to the aircraft manufacturer. The supplier related data includes any of manufacturing data, weight, raw materials (consumption) data, power consumption, process information, and/or organizational data, such as part-number data.

A third data source 18 provides recycling related data. The recycling related data include track-and-trace data that allow specific products that are used in the aircraft manufacturing process to be tracked. The recycling data may also include an environmental impact estimate for recycling, incineration and/or landfill dispatch of the component at the end of life.

The first to third data sources 14-18 can be combined into an environmental product description (EPD) 20. The EPD 20 includes the data relevant for conducting the life cycle analysis and determining and/or reducing the environmental impact as envisaged herein, while protecting the (protected) data of the entity providing the EPD 20. The EPD 20 therefore decouples relevant data from protected data and enables data sharing between the suppliers, aircraft manufacturer and aircraft operator.

A fourth data source 22 provides operation related data. The operation related data are indicative of the environmental footprint of aircraft operation, and may include fuel type, weight, and power consumption. It should be noted that aircraft operation includes any actions necessary to operate the aircraft. However, aircraft operation excludes activities that are part of the passenger interaction (like service, food, lavatories, etc.).

The fourth data source 22 may include a plurality of logging devices 24. Each logging device 24 is configured to record operation related data about a piece of aircraft equipment, such as an oven, a sink, etc. The operation related data particularly include power consumption.

The LCA system 10 further includes a database 26. The EPD 20 and the operation related data are stored in the database 26 for further use in the LCA system 10.

A fifth data source 28 provides specific usage data. The specific usage data are indicative of the specific usage of the aircraft by a specific aircraft operator. In other words, the specific usage data are indicative of the expected resource consumption by a specific aircraft as used by a specific aircraft operator. The specific usage data include any of cabin configuration data (e.g. which monuments are used and how are they arranged), cabin operation data (e.g. how intensely is cabin interior used), power consumption data (how much energy consumption is expected for a specific usage profile), mission profile data, seat count, commodities configuration data. For the purpose of clarity, the specific usage data are indicative of in particular any activities or pieces of equipment that are installed for the passengers.

The LCA system 10 includes an LCA unit 30. The LCA unit 30 is configured for determining an environmental footprint of the aircraft based on the data stored in the database 26 and the specific usage data obtained from the fifth data source 28. The LCA unit 30 is preferably able to determine the fuel consumption of the aircraft during operation. Furthermore, the LCA unit 30 may determine possible changes to the specific usage data and/or operation related data that allow for smaller fuel consumption, while considering the product related data, in particular predetermined requirements.

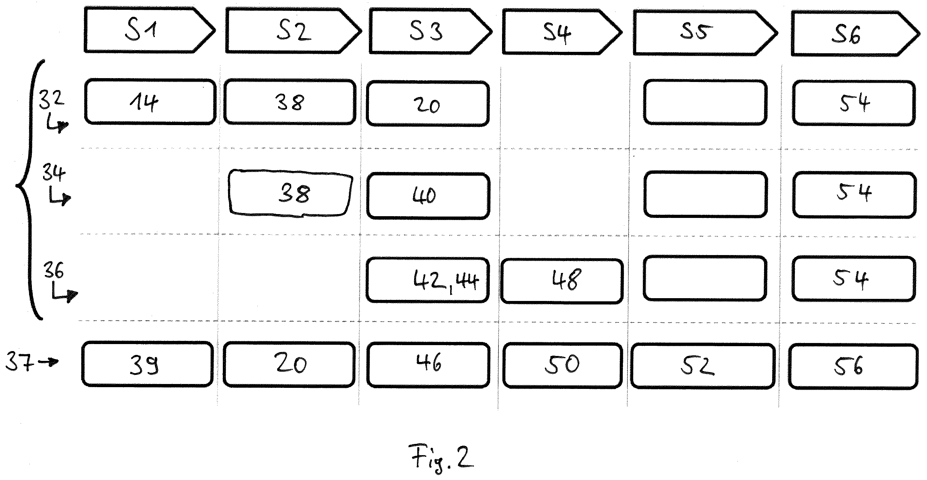

Referring to Fig. 2 an embodiment of a method for life cycle assessment is described based on the depicted data flow.

The data flow comprises a first level 32 that processes the supplier related data, a second level 34 that processes the operation related data, and a third level 36 that the processes specific usage data. Furthermore, the data flow includes an output level 37 that processes results.

The first level 32 processes data in order to determine the environmental footprint of the equipment that is installed in the aircraft. The second level 34 processes data in order to determine the environmental footprint of the cabin of the aircraft. The third level 36 processes data in order to determine the environmental footprint of the operation of the aircraft.

In a first step S1, supplier related data are acquired in order to determine product related data 39.

In a second step S2, the supplier related data, the product related data, and - if applicable - the recycling related data are combined into the EPD 20. This is done by performing an eco-assessment 38 on the first level 32 or the second level 34. The eco assessment 38 determines and assigns an ecological/environmental impact value to the acquired data, in order to obtain the EPD 20. The first step S1 and/or second step S2 is/are preferably performed by the supplier. The second step S2 may be performed by a third-party service company.

In a third step S3, the EPD 20, aircraft factors 40 (such as fuel type, weight, and/or power consumption), and the mission profile data 42 and the cabin operation data 44 are used by the LCA unit 30 to determine reference LCA data 46. These reference LCA data 46 are indicative of the environmental footprint, such as the power and fuel consumption of the aircraft. The third step S3 may be performed by the aircraft operator and/or the aircraft manufacturer.

In a fourth step S4, the LCA unit 30 includes the cabin configuration data 48 into the process and determines configuration change data 50 that are indicative of possible changes to the cabin configuration that can enable reduction of fuel consumption. The fourth step S4 is preferably performed by the aircraft operator and/or the aircraft manufacturer.

In a fifth step S5, a specific level of the first to third levels 32-36 can be selected for visualization and/or determination of target LCA data 52. The target LCA data 52 are indicative of the environmental footprint of a specific aircraft with a specific aircraft operator profile. In other words, the target LCA data 52 represent the environmental impact of a specific aircraft having a specific cabin configuration as operated by the specific aircraft operator.

In a sixth step S6, for each level, the corresponding level environmental footprint 54 is determined. Furthermore, the overall environmental footprint 56 is determined based on the level environmental footprint.

In order to improve the environmental footprint of an aircraft, the invention proposes a method for life cycle assessment. The method comprises:
a) a group of data sources (14, 16, 18) providing data related to vehicle equipment, a fourth data source (22) providing operation related data indicative of the operation of the vehicle, and a fifth data source (28) providing specific usage data indicative of the specific usage of a piece of vehicle equipment by a vehicle operator;
b) determining a reference LCA based on the data obtained in step a);
c) determining configuration change data based on configuration data that relates to the configuration of a vehicle;
d) determining an environmental footprint of the vehicle based on the reference LCA and the configuration change data.

### List of reference signs:

- 10: life cycle assessment system (LCA system)
- 12: data source
- 14: first data source
- 16: second data source
- 18: third data source
- 20: environmental product description (EPD)
- 22: fourth data source
- 24: logging device
- 26: database
- 28: fifth data source
- 30: LCA unit
- 32: first level (equipment level)
- 34: second level (cabin level)
- 36: third level (operational level)
- 38: eco assessment
- 40: aircraft factor
- 42: mission profile data
- 44: cabin operation data
- 46: reference LCA data
- 48: cabin configuration data
- 50: configuration change data
- 52: target LCA data
- 54: level environmental footprint
- 56: overall environmental footprint

## Claims

1. A computer-implemented method for life cycle assessment relating to the environmental footprint of a vehicle, the method **characterised by**:
a) a group of data sources (14, 16, 18) providing data related to vehicle equipment, wherein the group of data sources comprises a first data source (14) that provides product related data that include requirements for manufacture of the vehicle, wherein the product related data include CAD/CAM data,
a fourth data source (22) providing operation related data indicative of the operation of the vehicle, wherein the fourth data source (22) provides operation related data obtained by a logging device (44), and the operation related data include energy consumption data of the vehicle, wherein the operation related data exclude activities that are part of passenger interaction, and
a fifth data source (28) providing specific usage data indicative of the specific usage of a piece of vehicle equipment by a vehicle operator, wherein the specific usage data include any of cabin configuration data, cabin operation data, power consumption data, mission profile data, seat count, commodities configuration data, wherein the specific usage data are indicative of any activities or pieces of equipment that are installed for passengers;
b) determining a reference LCA based on the data obtained in step a);
c) determining configuration change data based on configuration data that relates to the configuration of a passenger cabin and/or cargo hold;
d) determining an environmental footprint of the vehicle based on the reference LCA and the configuration change data.

2. The method according to any of the preceding claims, wherein the group of data sources comprises a second data source (16) that provides supplier related data that are indicative of the environmental footprint of a product that is supplied to a vehicle manufacturer.

3. The method according to claim 2, wherein the product supplied is a piece of vehicle equipment, and the supplier related data is indicative of the power consumption of the vehicle equipment.

4. The method according to any of the preceding claims, wherein the group of data sources includes a third data source (18) that provides recycling related data

5. The method according to any of the preceding claims, wherein the reference LCA data are determined by calculating the energy consumption caused by vehicle equipment due to the specific usage indicated by the specific usage data.

6. The method according to any of the preceding claims, wherein the configuration change data are determined by calculating the energy consumption caused by a specific vehicle configuration indicated by the configuration data.

7. The method according to any of the preceding claims, wherein the environmental footprint includes energy consumption, that is determined based data of steps a) to c).

8. An LCA system (10) for determining an environmental footprint of a vehicle, the LCA system (10) **characterised by** means for carrying out the method according to any of the preceding claims.

## Patentansprüche

1. Computerimplementiertes Verfahren zur Lebenszyklusbewertung in Bezug auf den ökologischen Fußabdruck eines Fahrzeugs, wobei das Verfahren **gekennzeichnet ist durch**:
a) eine Gruppe von Datenquellen (14, 16, 18), die Daten bezüglich Fahrzeugausrüstung bereitstellen, wobei die Gruppe von Datenquellen eine erste Datenquelle (14) umfasst, die produktbezogene Daten bereitstellt, die Anforderungen für die Herstellung des Fahrzeugs einschließen, wobei die produktbezogenen Daten CAD/CAM-Daten einschließen,
eine vierte Datenquelle (22), die betriebsbezogene Daten bereitstellt, die den Betrieb des Fahrzeugs angeben, wobei die vierte Datenquelle (22) betriebsbezogene Daten bereitstellt, die **durch** eine Protokolliervorrichtung (44) erhalten werden, und die betriebsbezogenen Daten Energieverbrauchsdaten des Fahrzeugs einschließen, wobei die betriebsbezogenen Daten Aktivitäten ausschließen, die Teil einer Passagierinteraktion sind, und
eine fünfte Datenquelle (28), die spezifische Verwendungsdaten bereitstellt, die die spezifische Verwendung eines Fahrzeugausrüstungsgegenstands **durch** einen Fahrzeugführer angeben, wobei die spezifischen Verwendungsdaten beliebige von Kabinenkonfigurationsdaten, Kabinenbetriebsdaten, Leistungsverbrauchsdaten, Missionsprofildaten, Sitzzählung, Rohstoffkonfigurationsdaten einschließen, wobei die spezifischen Verwendungsdaten beliebige Aktivitäten oder Ausrüstungsgegenstände, die für Passagiere installiert sind, angeben;
b) Bestimmen einer Referenz-LCA basierend auf den in Schritt a) erhaltenen Daten;
c) Bestimmen von Konfigurationsänderungsdaten basierend auf Konfigurationsdaten, die sich auf die Konfiguration einer Passagierkabine und/oder eines Frachtraums beziehen;
d) Bestimmen eines ökologischen Fußabdrucks des Fahrzeugs basierend auf der Referenz-LCA und den Konfigurationsänderungsdaten.

2. Verfahren nach einem der vorhergehenden Ansprüche, wobei die Gruppe von Datenquellen eine zweite Datenquelle (16) umfasst, die zuliefererbezogene Daten bereitstellt, die den ökologischen Fußabdruck eines Produkts, das an einen Fahrzeughersteller geliefert wird, angeben.

3. Verfahren nach Anspruch 2, wobei das gelieferte Produkt ein Fahrzeugausrüstungsgegenstand ist und die zuliefererbezogenen Daten den Leistungsverbrauch der Fahrzeugausrüstung angeben.

4. Verfahren nach einem der vorhergehenden Ansprüche, wobei die Gruppe von Datenquellen eine dritte Datenquelle (18) einschließt, die Recycling-bezogene Daten bereitstellt.

5. Verfahren nach einem der vorhergehenden Ansprüche, wobei die Referenz-LCA-Daten durch Berechnen des Energieverbrauchs bestimmt werden, der durch Fahrzeugausrüstung aufgrund der spezifischen Verwendung, die durch die spezifischen Verwendungsdaten angegeben wird, verursacht wird.

6. Verfahren nach einem der vorhergehenden Ansprüche, wobei die Konfigurationsänderungsdaten durch Berechnen des Energieverbrauchs bestimmt werden, der durch eine spezifische Fahrzeugkonfiguration, die durch die Konfigurationsdaten angegeben wird, verursacht wird.

7. Verfahren nach einem der vorhergehenden Ansprüche, wobei der ökologische Fußabdruck einen Energieverbrauch einschließt, der basierend auf Daten aus Schritten a) bis c) bestimmt wird.

8. LCA-System (10) zum Bestimmen eines ökologischen Fußabdrucks eines Fahrzeugs, wobei das LCA-System (10) durch ein Mittel zum Ausführen des Verfahrens nach einem der vorhergehenden Ansprüche gekennzeichnet ist.

## Revendications

1. Procédé mis en œuvre par ordinateur d'évaluation du cycle de vie concernant l'empreinte environnementale d'un véhicule, le procédé étant **caractérisé par** :
a) un groupe de sources (14, 16, 18) de données fournissant des données liées à l'équipement du véhicule, le groupe de sources de données comprenant une première source (14) de données fournissant des données liées au produit qui comprennent des exigences pour la fabrication du véhicule, les données liées au produit comprenant des données de CAO/FAO,
une quatrième source (22) de données fournissant des données liées au fonctionnement indicatives du fonctionnement du véhicule, la quatrième source (22) de données fournissant des données liées au fonctionnement obtenues par un dispositif (44) d'enregistrement, et les données liées au fonctionnement incluant des données de consommation d'énergie du véhicule, les données liées au fonctionnement excluant les activités qui font partie de l'interaction des passagers, et
une cinquième source (28) de données fournissant des données d'utilisation spécifiques indicatives de l'utilisation spécifique d'un équipement de véhicule par un opérateur de véhicule, les données d'utilisation spécifiques comprenant des données de configuration de cabine, des données de fonctionnement de cabine, des données de consommation d'énergie, des données de profil de mission, un nombre de sièges, des données de configuration des aménagements, les données d'utilisation spécifiques étant indicatives d'activités ou d'équipements quelconques installés pour les passagers ;
b) la détermination d'une ACV de référence à partir des données obtenues à l'étape a) ;
c) la détermination de données de changement de configuration d'après des données de configuration qui se rapportent à la configuration d'une cabine pour passagers et/ou d'une soute à marchandises ;
d) la détermination d'une empreinte environnementale du véhicule à partir de l'ACV de référence et des données de changement de configuration.

2. Procédé selon l'une quelconque des revendications précédentes, le groupe de sources de données comprenant une deuxième source (16) de données qui fournit des données liées au fournisseur qui sont indicatives de l'empreinte environnementale d'un produit qui est fourni à un constructeur de véhicule.

3. Procédé selon la revendication 2, le produit fourni étant un élément d'équipement de véhicule, et les données liées au fournisseur étant indicatives de la consommation d'énergie de l'équipement de véhicule.

4. Procédé selon l'une quelconque des revendications précédentes, le groupe de sources de données comprenant une troisième source (18) de données qui fournit des données liées au recyclage.

5. Procédé selon l'une quelconque des revendications précédentes, les données d'ACV de référence étant déterminées en calculant la consommation d'énergie causée par l'équipement du véhicule en raison de l'utilisation spécifique indiquée par les données d'utilisation spécifiques.

6. Procédé selon l'une quelconque des revendications précédentes, les données de changement de configuration étant déterminées en calculant la consommation d'énergie causée par une configuration de véhicule spécifique indiquée par les données de configuration.

7. Procédé selon l'une quelconque des revendications précédentes, l'empreinte environnementale comprenant une consommation d'énergie, qui est déterminée d'après des données des étapes a) à c).

8. Système (10) d'ACV destiné à déterminer une empreinte environnementale d'un véhicule, le système (10) d'ACV étant **caractérisé par** des moyens destinés à réaliser le procédé selon l'une quelconque des revendications précédentes.
